# EUROPÄISCHE PATENTANMELDUNG

(11) **EP 4 847 356 A1**
(43) Veröffentlichungstag der Anmeldung: **02.12.2026**
(21) Anmeldenummer: 25179267.7
(22) Anmeldetag: 28.05.2025
(51) Int. Cl.: B62D 55/08, B62D 55/116, B62D 55/084

(54) **UNTERWAGEN FÜR TIEFBAUMASCHINE**

(71) Anmelder: BAUER Maschinen GmbH, 86529 Schrobenhausen (DE)
(72) Erfinder: Cernko, Dominik Tigard, 85123 Karlskron (DE); Wiedmann, Andreas, 86637 Wertingen (DE)
(74) Vertreter: Wunderlich & Heim Patentanwälte PartG mbB

(57) **Zusammenfassung**

Die Erfindung betrifft einen Unterwagen (1) für eine Tiefbaumaschine, mit einer Mittelbrücke (3) und zwei Raupen-Fahrschiffen (2), die mit der Mittelbrücke (3) über ineinander teleskopierbare Holme (5a,5b) der an gegenüberliegenden Seiten der Mittelbrücke (3) angeordneten Raupen-Fahrschiffe (2) verbunden oder verbindbar sind, sodass die Raupen-Fahrschiffe (2) in einer Teleskopierrichtung zwischen einer definierten Transportstellung mit minimaler Spurweite und einer definierten ersten Arbeitsstellung mit maximaler Spurweite bewegt/verstellt werden können. Die Raupen-Fahrschiffe (2) sind so ausgebildet, dass sie in der Teleskopierrichtung in mindestens eine weitere definierte zweite Arbeitsstellung mit einer geringeren Spurweite als die maximale Spurweite und/oder mit einer relativ zu einer Mittelebene der Mittelbrücke (3) unsymmetrischen Spuranordnung bewegt/verstellt werden können.

## Beschreibung

Die Erfindung betrifft Unterwagen für Tiefbaumaschinen.

Unterwagen für Tiefbaumaschinen, insbesondere zum Einsatz im Spezialtiefbau, haben üblicherweise eine Mittelbrücke und zwei Fahrschiffe mit Raupenketten, Gleisketten bzw. Raupen auf Kettenträgern, die an gegenüberliegenden Seiten der Mittelbrücke angeordnet und mit der Mittelbrücke verbunden oder verbindbar sind. In der folgenden Beschreibung wird der Begriff "Raupen-Fahrschiffe" einheitlich für derartige Fahrschiffe verwendet.

Für diese Unterwagen besteht die Anforderung nach möglichst großen Kippkanten, um zu gewährleisten, dass im Betrieb eine ausreichende Standsicherheit der Tiefbaumaschine gegeben ist. Da der Transport ab bestimmten Gerätegrößen jedoch einen erheblichen Mehraufwand und zusätzliche Kosten mit sich bringt, gibt es die Anforderung nach möglichst geringen Transportbreiten. Aus diesen gegenläufigen Anforderungen ergeben sich für die Raupen-Fahrschiffe in der Regel zwei verschiedene Stellungen. Die Arbeitsstellung, in der die maximalen Kippkanten vorliegen, sowie die Transportstellung, in der eine minimale Spurweite vorliegt. In einigen Fällen werden Unterwagen zum Transport auch teilweise zerlegt, indem die Fahrschiffe abgebaut werden.

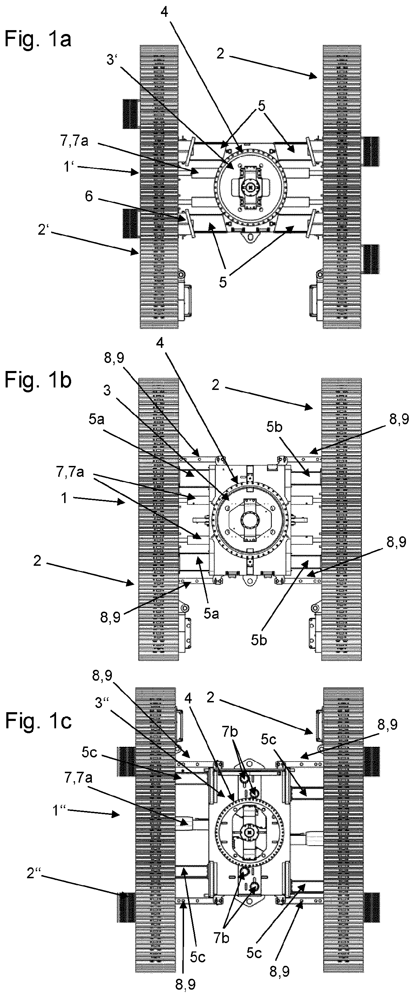

Diese zwei Stellungen der Fahrschiffe bzw. damit einhergehende Spurweiten der Unterwagen werden im Stand der Technik durch hydraulisch teleskopierbare Kettenträger erreicht. Dabei werden gemäß Fig. 1 drei Bauarten für verstellbare Raupen-Fahrschiffe an Unterwagen unterschieden: "Starres H" (Fig. 1a), "Holm-in-Holm (Fig. 1b) und "Holm neben Holm" (Fig. 1c).

Unterwagen 1' der Bauart "Starres H" sind symmetrisch aufgebaut. Die Kettenträger 2' haben Holmaufnahmen 6, mit denen sie auf die starren Holme 5 einer in der Draufsicht H-förmigen Mittelbrücke 3' aufgesetzt und auf denen sie zur Verstellung der Spurweite verschoben werden können. Die Lagerbedingungen auf den Holmen sind dabei unabhängig von der Position der Kettenträger ähnlich und immer fest definiert, so dass entsprechende Arbeitsstellungen relativ einfach durch mehrere Absteckpunkte ergänzend zu einer komplett ausgefahrenen Spurweite realisiert werden können.

Unterwagen 1" der Bauart "Holm neben Holm" sind unsymmetrisch aufgebaut. Dadurch muss jeder der vier Holme 5c der beiden Raupen-Fahrschiffe 2" separat von den jeweils anderen Holmen gelagert werden, mit der Folge, dass die Lagerung und Festlegung in definierten Stellungen einfach für jeden Holm gesteuert werden kann. Beispielweise können mit Hilfe einer hydraulischen Klemmung durch separate Hydraulikzylinder zum Klemmen 7b an der Mittelbrücke 3" die durch Hydraulikzylinder 7a einer Aktuatoranordnung 7 eingestellten teleskopierten Positionen bzw. Auszugstellungen der Holme die Kettenträger fixiert werden. Eine solche Klemmung kann im Übrigen auch bei der Erfindung zur Anwendung kommen.

Bei Unterwagen 1 der Bauart "Holm in Holm" sind die Holme 5a, 5b der beiden Fahrschiffe teleskopierbar ineinander gelagert. Ein Holm mit größerem Durchmesser ist als äußerer Holm 5a in der Mittelbrücke 3 gelagert. Ein Holm mit kleinerem Durchmesser ist als innerer Holm 5b an der Mittelbrücke und in dem bzw. durch den äußeren Holm 5a gelagert.

Aus Kostengründen ist hier das Vorgehen am geläufigsten, an den Außenseiten der Mittelbrücke in der Querrichtung des Unterwagens (d. h. der Längsrichtung der Holme in der Teleskopierrichtung) für jeden Holm einen ersten, festen Lagerpunkt und an einer weiteren vordefinierten Stelle der Mittelbrücke eine zentrale Lagerung vorzusehen. An dieser Stelle sind innerhalb der Mittelbrücke Gleitelemente auf einer bearbeiteten Fläche angebracht, auf welcher der äußere Holm gelagert wird. Ebenso befindet sich innerhalb des äußeren Holmes an der gleichen Position die Lagerstelle zur Lagerung des inneren Holmes. Mit Hilfe zweier Druckstücke, die über eine mittig in der Mittelbrücke angeordnete mechanische Einstellvorrichtung in einer Richtung senkrecht zu Mittelachsen der Holme verstellt werden können, wird sichergestellt, dass beide Holme in einer Arbeitsstellung mit maximaler Spurweite und symmetrischem Auszug möglichst spielfrei an einem Lagerpunkt etwa mittig in der Mittelbrücke in der Querrichtung gelagert sind. Ein erstes Druckstück ist dabei an der Mittelbrücke gelagert und ein zweites Druckstück ist in der oberen Wand des äußeren Holmes gelagert, so dass der Holm über das erste und zweite Druckstück in einer fluchtenden Stellung von der Einstellvorrichtung mit Kraft beaufschlagt und zu dem inneren Holm belastet ist sowie ein definierter Lagerspalt gegenüber dem inneren Holm eingestellt ist.

Beim Austeleskopieren in die Arbeitsstellung werden die teleskopierbaren Holme nacheinander auseinander gefahren, bis die ersten und zweiten Druckstücke an der Einstellvorrichtung übereinander liegen, wobei die Einstellvorrichtung an dieser Stelle dazu dient, das Lagerspiel der Lagerung beider Holme über die Positionierung des ersten Druckstücks an den definierten Lagerstellen (jeweils an den Außenseiten der Mittelbrücke und zentral in der Mitte der Mittelbrücke) im Zustand der maximalen Kippkanten auf einen gewünschten Wert einzustellen. Zur Herstellung einer definierten Lagersituation werden zusätzlich Anlaufschrägen und bearbeitete Kontaktflächen an den Kontaktpunkten genutzt. An anderen Auszugpositionen der Holme funktioniert diese definierte Lagerung nicht, da keine definierten Kontaktflächen bzw. Druckstücke und geeignete belastbare Materialpaarungen vorhanden sind. Somit ist - außer in der Arbeitsstellung mit maximaler Spurweite, in welcher die beiden Fahrschiffe symmetrisch ausgefahren sind - kein sicherer Arbeitsbetrieb der Tiefbaumaschine (außer Fahren ohne Arbeitsbelastung) möglich bzw. zulässig.

Bei beengten Baustellenverhältnissen gibt es allerdings die Anforderung, dass die Transportstellung oder weitere Auszugstellungen des Unterwagens zusätzlich zu der einen Arbeitsstellung mit maximaler Spurweite auch im Betrieb der Tiefbaumaschine genutzt werden dürfen, um die Kippkanten dadurch bewusst zu reduzieren, damit die Breite des Unterwagens an eine Baustellensituation angepasst werden kann. Aufgrund dieser Reduzierung der Kippkanten müssen dann aber auch die Lastfälle und die Benutzungsmöglichkeiten der Tiefbaumaschine eingeschränkt werden.

Die Einschränkung der Benutzungsmöglichkeit der Tiefbaumaschine in Abhängigkeit von einer Einstellung der Spurweite des Unterwagens, auch in Verbindung mit der vorliegenden Erfindung, kann beispielsweise durch eine Vorrichtung bzw. ein Verfahren realisiert werden, wie es in der EP 3 722 512 A1 offenbart ist. Bei einem solchen Verfahren können in einer Steuereinrichtung der Tiefbaumaschine unterschiedliche einzelne Arbeitsbereiche hinterlegt werden, wobei jeder einzelne Arbeitsbereich einen unterschiedlichen Satz von Grenzbetätigungsparametern als Standsicherheitsvorgaben für Betätigungseinheiten der Tiefbaumaschine aufweist, die in diesem Fall abhängig von der Spurweite bzw. der Kippkanten zur Anwendung kommen und automatisch überwacht werden können.

Sonderfälle für beengte Baustellenverhältnisse wurden bisher mit Unterwagen der Bauarten "Starres H" oder "Holm neben Holm" abgedeckt. "Starre H"-Unterwagen sind allerdings dadurch limitiert, dass die Länge der (starren) Holme so gewählt werden muss, dass die Mittelbrücke selbst in der Querrichtung nicht größer als die angestrebte Transportbreite ist. Hierdurch ist das Verhältnis von eingefahrener zu ausgefahrener Spurweite stark eingeschränkt. Bei "Holm neben Holm"-Unterwagen kann dieses Verhältnis durch bestimmte konstruktive Maßnahmen (z. B. außermittige Lagerstelle, längere Holme, Holme, die bis in den gegenüberliegenden Kettenträger hineinreichen) teilweise deutlich größer ausgeführt werden. Allerdings haben "Holm neben Holm"-Unterwagen den prinzipbedingten Nachteil, dass der Platzbedarf der Mittelbrücke in der Längsrichtung groß ist (weil die Holme nebeneinander gelagert werden), dass dadurch auch das Gewicht des Unterwagens hoch ist, und dass die unsymmetrische Krafteinleitung unvorteilhaft ist.

Die zuletzt genannten bauartbedingten Nachteile von "Holm neben Holm"-Unterwagen können mit "Holm in Holm"-Unterwagen umgangen werden, bei denen zum einen der Platzbedarf der Mittelbrücke in der Längsrichtung geringer ausfällt, da jeweils zwei Holme ineinander gelagert werden, wodurch das Gewicht des Unterwagens reduziert werden kann, und bei denen durch den symmetrischen Aufbau eine bessere Kraftübertragung erreicht werden kann. Eine naheliegende Möglichkeit, mehrere Spurweiten an einem "Holm in Holm" Unterwagen auch im Arbeitseinsatz nutzen zu können, besteht darin, die Flächen an beiden teleskopierbaren Holmen als Ganzes so vorzubereiten, dass sie bereits aus geeignetem Material für die Gleitbewegung ausgeführt sind und auch ausreichend genau gefertigt oder bearbeitet werden, damit - wie bei der Bauart "Starres H" - stets ein passendes definiertes Lagerspiel gewährleistet ist. Dies würde jedoch bedeuten, dass folgende Flächen vollständig vorbereitet sein müssen: äußerer Holm außen oben und unten, äußerer Holm innen oben und unten, innerer Holm außen oben und unten. Die beiden Holme müssten also so genau ausgeführt sein, dass der innere Holm durchgehend im äußeren Holm geführt ist. Dies ist aufgrund der Größe der Baugruppen ohne erhebliche Mehrkosten nicht umsetzbar.

Der Erfindung liegt vor diesem Hintergrund die **Aufgabe** zugrunde, einen Unterwagen für Tiefbaumaschinen anzugeben, der die Anforderung nach verschiedenen Arbeitsstellungen der Fahrschiffe in wirtschaftlicher Weise erfüllen kann und den Betrieb sowohl unter Nutzung der maximalen Kippkanten als auch bei einem beengten Baustelleneinsatz ermöglicht.

Die Aufgabe wird durch einen Unterwagen für Tiefbaumaschinen mit den Merkmalen des Anspruchs 1 gelöst. Bevorzugte Ausführungen sind in den abhängigen Ansprüchen angegeben.

Die Erfindung betrifft demnach insbesondere Unterwagen für eine Tiefbaumaschine, mit einer Mittelbrücke und zwei Raupen-Fahrschiffen, die mit der Mittelbrücke über ineinander teleskopierbare Holme der an gegenüberliegenden Seiten der Mittelbrücke angeordneten Raupen-Fahrschiffe verbunden oder verbindbar sind, sodass die Raupen-Fahrschiffe in einer Teleskopierrichtung zwischen einer definierten Transportstellung (mit entsprechenden definierten Lagerpunkten für die Holme) mit minimaler Spurweite und einer definierten ersten Arbeitsstellung (mit entsprechenden definierten Lagerpunkten für die Holme) mit maximaler Spurweite bewegt/verstellt werden können, wobei die Raupen-Fahrschiffe erfindungsgemäß so ausgebildet sind, dass sie in der Teleskopierrichtung in mindestens eine weitere definierte zweite Arbeitsstellung (mit entsprechenden definierten Lagerpunkten für die Holme) mit einer geringeren Spurweite als die maximale Spurweite und/oder mit einer relativ zu einer Mittelebene der Mittelbrücke unsymmetrischen Spuranordnung bewegt/verstellt werden können.

Eine Grundidee der Erfindung besteht darin, die bauartbedingten Vorteile der "Holm-in-Holm"-Bauart eines Unterwagens zu nutzen und die Erweiterung der nutzbaren Arbeitsstellungen der Raupen-Fahrschiffe (d. h. deren Auszugstellungen) mit geringen baulichen und fertigungstechnischen Anforderungen zu realisieren.

In einer bevorzugten Ausführungsform ist in der Mittelbrücke zumindest eine mechanische Einstellvorrichtung vorgesehen, vorzugsweise in einem Mittelbereich der Mittelbrücke in der Teleskopierrichtung, die ausgestaltet ist, um eine Spieleinstellung an einer definierten Lagerposition der teleskopierbaren Holme zu ermöglichen. Die Spieleinstellung wird in der Regel in der Werkstatt im Rahmen der Konfiguration der Maschine eingestellt.

Diese mechanische Einstellvorrichtung kann einen Aktuator zum Betätigen eines ersten Druckstücks in einer Zustellrichtung (senkrecht) zu den Holmen aufweisen. Eine solche mechanische Einstellvorrichtung kann in einer einfachen Variante einen oder mehrere Schraubenbolzen als Aktuator aufweisen, der/die in ein Gewinde an der Mittelbrücke "von Hand" über ein Werkzeug gedreht wird/werden, oder kann in einer fernbetätigbaren Variante einen motorischen Spindelantrieb oder einen Hydraulikzylinder als Aktuator aufweisen, über den die Betätigung des ersten Druckstücks zur Spieleinstellung oder zum Lösen selektiv bewirkt werden kann.

Die mechanische Einstellvorrichtung weist vorzugsweise ein zweites Druckstück auf, das beweglich in einer Aufnahme eines der beiden Holme, vorzugsweise dem in Radialrichtung äußeren der teleskopierbaren Holme, angeordnet ist und mit dem ersten Druckstück in einer Arbeitsstellung der Holme in Anlage bringbar ist, um die Holme gegeneinander mit einem definierten Lagerspalt an einer Lagerposition festzulegen. Zur Realisierung der mehreren Arbeitsstellungen können nach diesem Prinzip mehrere Aufnahmen für ein jeweiliges zweites Druckstück in dem einen der beiden Holme entsprechend den mehreren Arbeitsstellungen bzw. Lagerpositionen ausgebildet sein, und können jeweils ein zweites Druckstück aufnehmen, derart, dass die zweiten Druckstücke mit dem einen der beiden Holme bei der Verstellung mit verschiebbar sind.

Dabei wird also insbesondere der große, d. h. äußere Holm so ausgeführt, dass er an mehreren Punkten Lagerstellen für den kleinen, d. h. inneren Holm, gewährleisten kann und es gleichzeitig ermöglicht ist, dass der äußere Holm selbst innerhalb der Mittelbrücke in mehreren Auszugstellungen spielfrei gesetzt werden kann.

Das zweite Druckstück ist demnach mehrfach vorhanden und kann dadurch, dass es jeweils in einer Aufnahme, beispielsweise in der Forme einer Stufenbohrung in einer oberen Wand des äußeren Holmes, aufgenommen ist, als Teil des äußeren Holmes mitverschoben werden.

Die mechanische Einstellvorrichtung kann ferner einen Schmierkanal aufweisen, der so vorgesehen ist, dass er durch das erste Druckstück und, bei Anordnung in der jeweiligen Arbeitsstellung bzw. Lagerposition, das entsprechende zweite Druckstück hindurch zu einer Kontaktstelle des zweiten Druckstücks mit dem anderen der Holme verläuft. Über diesen Schmierkanal, der auch verzweigt sein kann, können die Lager- bzw. Kontaktflächen an den Holmen bzw. Druckstücken von der Außenseite, beispielsweise über einen Schmiernippel, mit Schmiermittel (Schmierfett) geschmiert werden, ohne die Holme auszubauen.

Zur Verstellung der Raupen-Fahrschiffe zwischen den definierten Stellungen, beispielsweise aus der (eingefahrenen) Fahrstellung in die mehreren Arbeitsstellungen entlang der Teleskopierrichtung, kann wie im Stand der Technik bekannt, eine mechanische Aktuatoranordnung vorgesehen sein, die beispielsweise einen oder mehrere Hydraulikzylinder aufweisen kann, die vorzugsweise symmetrisch zu einer/der Mittelebene der Mittelbrücke angeordnet sind.

Solche Hydraulikzylinder können sowohl zum Bewegen der Raupen-Fahrschiffe relativ zur Mittelbrücke dienen, sie können aber auch hydraulisch sperrbar ausgebildet sein, beispielsweise über einen verstellbaren Anschlag und/oder Lasthalteventile, um eine jeweilige Ausfahrstellung und darüber die Stellung der Raupen-Fahrschiffe in der Teleskopierrichtung zu fixieren, um die Spurweiten fest zu definieren und um die im Betrieb auftretenden Querkräfte übertragen zu können.

Die Übertragung der Querkräfte ist bei hydraulischer Sperrung der Zylinder allerdings begrenzt, kann aber zumindest für eine Transportstellung oder kleine Unterwagen umsetzbar sein. Für den Betrieb, bei dem in der Regel hohe Querkräfte, beispielsweise beim Betrieb einer Verrohrungsanlage, auftreten können, kann es bevorzugt sein, diese nicht über die Hydraulikzylinder abzufangen und in die Kettenträger einzuleiten, sondern bei Bedarf und entsprechender Auslegung des Unterwagens alternativ oder zusätzlich eine lösbare mechanische Sicherung, vorzugsweise in der Form einer Absteckeinrichtung über Bolzen, die in passende Bohrungen eingesteckt werden, zur Fixierung der Stellungen der Raupen-Fahrschiffe in der Teleskopierrichtung vorzusehen.

Eine solche Absteckeinrichtung kann manuell zu betätigen sein, oder kann über einen Aktuator, beispielsweise einen Hydraulikzylinder, auch fernbetätigbar sein. Ferner kann die Absteckeinrichtung bevorzugt, weil einfach und robust aufgebaut und gut zugänglich, auch außerhalb eines Gehäuses der Mittelbrücke angeordnet sein, insbesondere in der Form einer Spurstange mit mehreren, den mehreren Stellungen der Raupen-Fahrschiffe in der Teleskopierrichtung zugeordneten Verriegelungspositionen, beispielsweise in der Form von Bohrungen für Verriegelungsbolzen.

Die mechanische Sicherung kann schließlich unterschiedliche Verriegelungspositionen bezüglich einem jeweiligen Abstand von der Mittelebene der Mittelbrücke für die beiden Raupen-Fahrschiffe aufweisen, wobei insbesondere eine größere Anzahl an Verriegelungspositionen für Auszugstellungen des inneren Holms als für solche des äußeren Holms und/oder Anordnungen der Verriegelungspositionen für unsymmetrische Auszugspositionen vorgesehen sein können. Dadurch ist auch eine bezüglich der Mittelebene der Mittelbrücke unsymmetrische Spureinstellung einfach möglich, wodurch - abhängig von einer Arbeitsaufgabe - ein Werkzeug der Tiefbaumaschine bei gedrehtem Oberwagen näher zu einem Raupenfahrwerk positioniert werden kann, beispielsweise in einer sog. "side-cutter"-Anwendung.

Die Erfindung wird nachfolgend anhand von bevorzugten Ausführungsbeispielen weiter erläutert, welche schematisch in den Zeichnungen dargestellt sind. In den Zeichnungen zeigen:
- Fig. 1:: eine Draufsicht auf einen Unterwagen mit verstellbaren Raupen-Fahrschiffen in drei Bauarten, wobei Fig. 1a einen Unterwagen der Bauart "Starres H", Fig. 1b einen Unterwagen der Bauart "Holm-in-Holm" gemäß einer Ausführungsform der Erfindung und Fig. 1c einen Unterwagen der Bauart "Holm neben Holm" zeigt;
- Fig. 2:: eine teilweise geschnittene Vorderansicht des Unterwagens der Fig. 1b, wobei Fig. 2a eine symmetrische Anordnung der Holme in einer ersten Arbeitsstellung bei maximaler Spurweite in vergrößerter Detailansicht, Fig. 2b die symmetrische Anordnung der Holme von Fig. 2a in der Vorderansicht und Fig. 2c eine unsymmetrische Anordnung der Holme zeigt, bei der sich der äußere Holm in der Fahrstellung und der innere Holm in einer ausgezogenen Stellung befindet;
- Fig. 3:: eine geschnittene Seitenansicht im Detail einer mechanischen Einstellvorrichtung des Unterwagens von Fig. 2; und
- Fig. 4:: eine teilweise geschnittene perspektivische Ansicht eines äußeren Holms in Vereinzelung.

Der Unterwagen 1 gemäß der Erfindung dient zur Verwendung mit einer Tiefbaumaschine in der Bauart eines mobilen Trägergeräts, das beispielsweise als Bohrgerät ausgeführt sein kann und dessen weitere Komponenten hier nicht dargestellt sind. Ein solches Trägergerät für den Tiefbau umfasst typischerweise ein Raupenfahrwerk (im Folgenden als "Raupen-Fahrschiffe" bezeichnet) als Bestandteil des Unterwagens, auf welchem ein Oberwagen drehbar gelagert ist. In einer Bedienkabine des Oberwagens kann sich ein Steuergerät befinden, mit dem Funktionen des Trägergeräts einschließlich des Unterwagens und von an das Trägergerät angebauten Werkzeugen, beispielsweise eine Bohrantriebsanordnung, zentral gesteuert werden können. Insbesondere über einen Anlenkmechanismus kann an dem Oberwagen vorzugsweise verstellbar ein Mast gelagert sein, welcher im Betrieb eine im Wesentlichen vertikale Position aufweist.

Die drei grundlegenden Bauarten von Unterwagen mit Raupen-Fahrschiffen wurden eingangs bereits erläutert, weshalb die folgende Beschreibung der grundlegenden Komponenten auf einen in Fig. 1b dargestellten Unterwagen der Bauart "Holm-in-Holm", auf welche sich die Erfindung bezieht, beschränkt wird. Die verwendeten gleichen Bezugszeichen, ggf. mit einem hochgestellten "'" oder """ bezeichnen entsprechende Komponenten der anderen Bauarten, die aber einander funktional entsprechen, sofern nicht anders vermerkt.

Der in Fig. 1b schematisch in der Draufsicht gezeigte Unterwagen 1 für eine Tiefbaumaschine umfasst, wie das im Prinzip aus dem Stand der Technik bekannt ist, eine Mittelbrücke 3 und zwei Raupen-Fahrschiffe 2, die mit der Mittelbrücke 3 über ineinander teleskopierbare Holme 5a, 5b der an gegenüberliegenden Seiten der Mittelbrücke 3 angeordneten Raupen-Fahrschiffe 2 verbunden oder verbindbar sind, sodass die Raupen-Fahrschiffe 2 in einer Teleskopierrichtung (senkrecht zu einer vertikalen Mittelebene der Mittelbrücke 3) zwischen einer definierten Transportstellung mit minimaler Spurweite und einer definierten ersten Arbeitsstellung mit maximaler Spurweite bewegt/verstellt werden können. An der Mittelbrücke 3 ist eine Drehkranzaufnahme 4 für den Drehkranz angeordnet, dessen Innen- oder Außenverzahnung mit einem angetriebenen Ritzel einer Antriebs-Getriebeeinheit in Eingriff ist, um einen an dem Unterwagen drehbar gelagerten Oberwagen um eine vertikale Drehachse zu drehen.

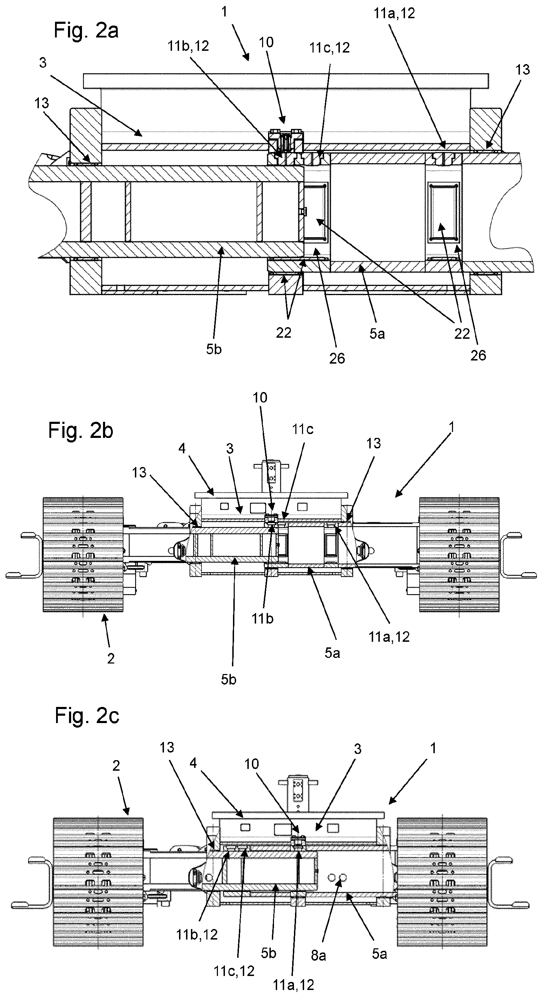

Die in Fig. 1b in der Draufsicht und in Fig. 2a und 2b in der Vorderansicht gezeigte Ausfahrstellung der Raupen-Fahrschiffe 2 ist die Arbeitsstellung mit maximaler Spurweite und symmetrischer Anordnung der Fahrschiffe. Eine Arbeitsstellung mit unsymmetrischer Anordnung der Fahrschiffe 2 und geringerer Spurweite ist in Fig. 2c in einer Vorderansicht gezeigt. Erfindungsgemäß ist nun vorgesehen, dass die Raupen-Fahrschiffe 2 so ausgebildet sind, dass sie in der Teleskopierrichtung in mindestens eine weitere definierte zweite Arbeitsstellung mit entsprechenden definierten Lagerpunkten mit einer geringeren Spurweite als die maximale Spurweite (die in Fig. 2a und 2b in einer Vorderansicht gezeigt ist) und/oder mit einer relativ zu einer Mittelebene der Mittelbrücke 3 unsymmetrischen Spuranordnung (die in Fig. 2c beispielhaft in einer Vorderansicht gezeigt ist) bewegt/verstellt werden können. Selbstverständlich können erfindungsgemäß auch mehrere weitere Arbeitsstellungen an weiteren Zwischenpositionen vorgesehen sein.

Die Verstellung der teleskopierbar ineinander eingesteckten Holme 5a, 5b von der Transportstellung mit minimaler Spurweite und symmetrischer Anordnung in die jeweilige Arbeitsstellung, also die Bewegung der Raupen-Fahrschiffe 2 zwischen den definierten Stellungen erfolgt wie im Stand der Technik beispielsweise über eine mechanische Aktuatoranordnung 7, die in der gezeigten Ausführungsform beispielsweise paarweise auf beiden Seiten der Mittelbrücke 3 und symmetrisch zu der Mittelebene der Mittelbrücke 3 angeordnete Hydraulikzylinder 7a umfassen kann.

Um die jeweilige Ausfahrstellung der teleskopierbaren Holme und darüber die Stellung der Raupen-Fahrschiffe 2 in der Teleskopierrichtung zu fixieren, können die Hydraulikzylinder hydraulisch sperrbar sein, beispielsweise über verstellbare Anschläge und/oder Lasthalteventile. Allerdings sind die über derart hydraulisch gesperrte Hydraulikzylinder übertragbaren Querkräfte begrenzt, so dass in Kombination oder alternativ eine lösbare mechanische Sicherung 8, 8a, vorzugsweise in der Form einer Absteckeinrichtung, zur Fixierung der jeweiligen Stellungen der Raupen-Fahrschiffe 2 in der Teleskopierrichtung bevorzugt ist.

Eine solche mechanische Sicherung in der Form einer Absteckeinrichtung kann an den Holmen 5a, 5b selbst ausgebildet sein, wie das in Fig. 2c durch mehrere Bolzenlöcher angedeutet ist, in die Verriegelungsbolzen lösbar eingesteckt werden können und die entsprechend den definierten Auszugstellungen der Holme mit passenden Bolzenlöchern an der Mittelbrücke oder dem jeweils anderen Holm fluchten, oder kann außerhalb eines Gehäuses der Mittelbrücke 3 angeordnet ist, insbesondere in Form mehrerer Spurstangen 9 mit jeweils mehreren, den Stellungen der Holme der Raupen-Fahrschiffe 2 in der Teleskopierrichtung zugeordneten Verriegelungspositionen/Bolzenlöchern, wie das anhand dem in Fig. 1b und Fig. 1c dargestellten Unterwagen gezeigt ist.

Die mechanische Sicherung 8 kann, unabhängig von ihrer Ausgestaltung, unterschiedliche Verriegelungspositionen bezüglich einem jeweiligen Abstand von der Mittelebene der Mittelbrücke 3 für die beiden Holme der Raupen-Fahrschiffe 2 aufweisen, so dass damit auch unsymmetrische Ausfahrstellungen der Holme fixiert werden können.

Um die teleskopierbaren Holme 5 (äußerer Holm 5a und innerer Holm 5b) in den definierten Auszugstellungen an definierten Lagerpositionen zu lagern, sind definierte Lagerelemente vorgesehen. Diese umfassen zunächst an den Außenseiten der Mittelbrücke 3 in der Querrichtung des Unterwagens (d. h. der Längsrichtung der Holme in der Teleskopierrichtung) für jeden Holm 5a, 5b einen ersten, äußeren festen Lagerpunkt 13.

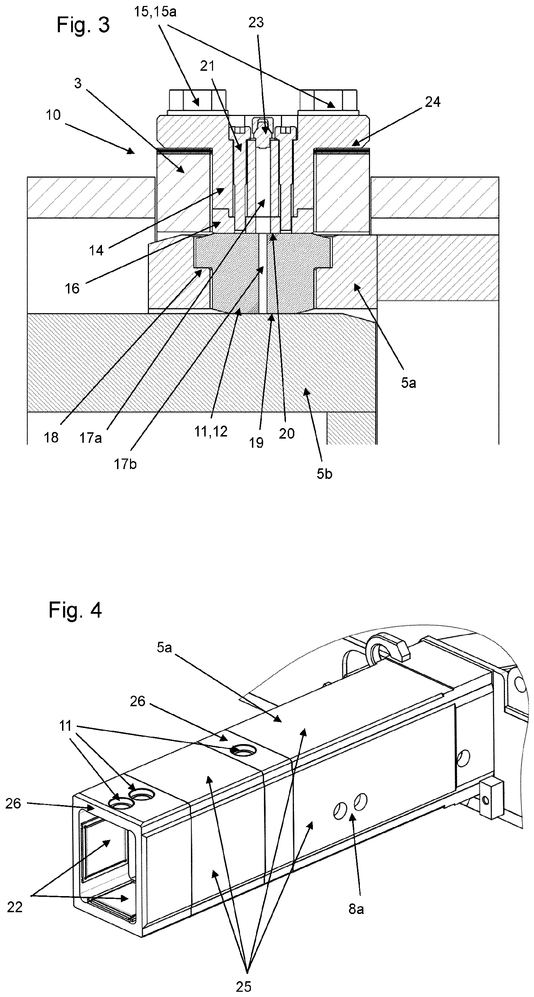

Ferner ist in der Mittelbrücke 3 zumindest eine mechanische Einstellvorrichtung 10 vorgesehen, vorzugsweise in einem Mittelbereich der Mittelbrücke 3 in der Querrichtung, die ausgestaltet ist, um eine Spieleinstellung an mehreren Lagerpositionen der teleskopierbaren Holme 5a, 5b zu ermöglichen. Ein Ausführungsbeispiel dieser Einstellvorrichtung ist in Fig. 3 im Detail gezeigt.

Die Ausführungsform der mechanischen Einstellvorrichtung 10 umfasst einen Aktuator 15 (hier in der Form von zwei Schraubbolzen 15a) zum Betätigen eines ersten, beweglich an der Mittelbrücke 3 gelagerten Druckstücks 14 in einer Zustellrichtung (senkrecht) zu den Holmen 5a, 5b. Eine Anschlagposition des ersten Druckstücks 14 zur Begrenzung der vertikalen Bewegung kann ggf. mit Unterlegblechen 24 eingestellt werden. Die mechanische Einstellvorrichtung 10 umfasst ferner ein zweites Druckstück 12, das beweglich in einer Aufnahme 11 in einer oberen Seitenwand des äußeren Holms 5a angeordnet ist und mit dem ersten Druckstück 14 in einer Stellung der Holme 5a, 5b in der Teleskopierrichtung, in der die Druckstücke 12, 14 miteinander fluchten, in Anlage bringbar ist, um die Holme 5a, 5b gegeneinander mit einem definierten Lagerspalt an einer Lagerposition festzulegen. Zwischen dem ersten Druckstück 14 und dem zweiten Druckstück 12 befindet sich ein Gleitelement 16, beispielsweise aus Aluminium-Bronze, das hier über zwei Schrauben 21 an dem ersten Druckstück 14 austauschbar befestigt ist und eine definierte, möglichst spielfreie Lagersituation mit geringerem Reibungskoeffizienten an einer Kontaktfläche 20 zwischen den beiden Druckstücken gewährleistet. An der Unterseite der Holme sind an den Kontaktflächen zwischen dem inneren und äußeren Holm sowie zwischen dem äußeren Holm und dem Mittelblock Gleitelemente 22 angeordnet, wie in Fig. 2a angedeutet ist. Solche Gleitelemente 22 sind auch an den seitlichen Kontaktflächen der Holme im Bereich der Lagerpositionen vorgesehen.

Das zweite Druckstück 12 ist hier als ein abgestufter Materialblock ausgebildet, der in die entsprechend als eine Stufenbohrung ausgebildete Aufnahme 11 in der oberen Wand des äußeren Holms 5a eingesetzt ist. Das zweite Druckstück 12 besitzt eine erste Anlagefläche 18 zur Anlage an einer Gegenanlagefläche des äußeren Holms 5a in der Aufnahme 11, eine zweite Anlagefläche 19 zur gleichzeitigen Anlage an einer Gegenanlagefläche des inneren Holms 5b und eine Gegenkontaktfläche zur Anlage an der Kontaktfläche 20 des Gleitelements 16 des ersten Druckstücks 14.

Das zweite Druckstück 12 ist so dimensioniert und auf die Aufnahme 11 abgestimmt, dass es mit dem äußeren Holm 5a in der Mittelbrücke 3 bewegt wird und weder diese noch die teleskopierende Bewegung relativ zum inneren Holm 5b behindert. Zur Herstellung einer definierten Lagersituation werden zusätzlich Anlaufschrägen und bearbeitete Kontaktflächen an den Kontaktpunkten genutzt, insbesondere an den Ablage- bzw. Kontaktflächen des zweiten Druckstücks 12 mit dem inneren Holm 5b und der Mittelbrücke bzw. Kontaktfläche 20, wie in Fig. 3 schematisch dargestellt ist.

Ein Schmierkanal 17a, 17b ist so vorgesehen, dass er von einem an der Außenseite angeordneten Schmiernippel 23 durch das erste Druckstück 14 und, bei Anordnung in der jeweiligen Arbeitsstellung an der Lagerposition, das entsprechende zweite Druckstück 12 hindurch zu einer Kontaktstelle des zweiten Druckstücks 12 mit dem inneren Holm 5b verläuft. Das durch den Schmierkanal 17a, 17b von außen zugeführte Schmiermittel, beispielsweise Schmierfett, gewährleistet die Schmierung der Kontaktflächen an der Lagerposition, ohne die Holme auszubauen.

Erfindungsgemäß sind nun mehrere Aufnahmen 11a, 11b, 11c an definierten Positionen des äußeren Holms 5a angeordnet und zur Aufnahme eines jeweiligen zweiten Druckstücks 12 in der oberen Wand des äußeren Holms 5a entsprechend den mehreren Arbeitsstellungen bzw. Lagerpositionen ausgebildet, so dass die teleskopierbaren Holme nicht nur in einer Fahrposition mit minimaler Spurweite und symmetrischer Anordnung der Holme sowie in einer (ersten) Arbeitsposition mit maximaler Spurweite und symmetrischer Anordnung der Holme, sondern auch in einer oder mehreren definierten Zwischenpositionen in der Teleskopierrichtung in symmetrischer und/oder in unsymmetrischer Anordnung der Holme angeordnet und möglichst spielfrei an definierten Lagerpositionen gelagert werden können. In Fig. 2 sind drei derartige Aufnahmen 11a-11c in der oberen Wand des äußeren Holms 5a, jeweils mit einem Druckstück 12 gezeigt, wobei zumindest einige der Druckstücke für nicht benötigte Auszugspositionen abhängig von einer Konfiguration des Unterwagens auch zunächst weggelassen und bei Bedarf nachgerüstet werden können.

Abhängig von den definierten Lagerungspositionen wird die Holmgeometrie in diesen Bereichen verstärkt, beispielsweise durch eine sog. "Lagerbrille" 26, die als separates Bauteil zwischen zwei Rohrabschnitte des Holmprofils eingeschweißt wird, und die Holme werden, wie bereits erwähnt, an den Kontaktflächen mit Gleitelementen 22 ausgestattet. In Fig. 2a und 4 sind derartige Gleitelemente 22 in Form von Platten aus Lagerbronze beispielhaft an den Innen- und Außenflächen des äußeren Holms 5b gezeigt, die als Kontakt- bzw. Gleitflächen in Frage kommen. Die Kontaktfläche des inneren Holms 5b (hier die obere Wandfläche) kann über die gesamte Auszuglänge bearbeitet und ggf. gehärtet und/oder mit einem Gleitelement versehen sein (mit der Folge, dass der innere Holm 5b stufenlos relativ zu dem äußeren Holm 5a angeordnet und das Lagerspiel an den durch die Lagerpositionen des äußeren Holms definierten Stellungen über die Einstellvorrichtung 10 wie beschrieben in jeder Stellung des inneren Holms eingestellt werden kann), oder kann auch nur an definierten Lagerpositionen bearbeitet sein. Die übrigen Flächen der Holme (in Fig. 4 mit 25 bezeichnet) können dann unbearbeitet bleiben bzw. müssen nicht mit der gleichen Präzision und/oder Festigkeit bzw. belastbaren Materialpaarungen in der Form von Gleitelementen wie die Lagerstellen ausgestattet sein.

Beim Austeleskopieren in die Arbeitsstellungen werden die teleskopierbaren Holme (symmetrisch oder unsymmetrisch) zueinander verfahren, bis das erste Druckstück 14 der Einstelleinrichtung 10 und die zweiten Druckstücke 12 des äußeren Holms 5a entsprechend der gewünschten Arbeitsstellung an der Einstellvorrichtung 10 so übereinander liegen, dass die nahezu spielfreie Lagerung beider Holme an den definierten Lagerstellen hergestellt ist und ein sicherer Arbeitsbetrieb der Tiefbaumaschine möglich bzw. zulässig ist. Dadurch, dass die mit geringem Spiel eingestellten Lagerbereiche nur relativ schmale Bereiche an den Holmen sind, kann das Teleskopieren der Holme über weite Strecken mit großem Spiel bzw. keiner oder nur geringer Reibung und daher weniger Kraft und entsprechend hoher Geschwindigkeit erfolgen. Außerdem werden durch die lediglich bereichsweise aufwendigere Bearbeitung beschränkt auf die Lagerstellen die Fertigungskosten deutlich reduziert.

Obwohl nicht dargestellt ist auch möglich, mehrere Einstellvorrichtung 10 für die Lagerpositionen in der Teleskopierrichtung an der Mittelbrücke vorzusehen. Auch die Aufnahmen 11 für die zweiten Druckstücke 12 im äußeren Holm 5a können in größerer Zahl und/oder größeren Abständen vorgesehen sein - in dieser Hinsicht ist die Darstellung der drei Aufnahmen 11a-c in den Fig. nur als Beispiel zu verstehen. Denkbar ist es schließlich auch, die Einstellvorrichtung 10 und die Aufnahmen 11 mit den (zweiten) Druckstücken 12 an der Unterseite des äußeren Holms anzuordnen.

Die an der mechanischen Sicherung 8 vorgesehenen Verriegelungspositionen werden selbstverständlich auf die jeweiligen definierten Lagerpositionen in den zulässigen Arbeitsstellungen der Holme abgestimmt. Außerdem kann die eingestellte Lagerposition der Holme auch manuell oder automatisiert erfasst und in die Steuerung der Tiefbaumaschine eingespeist werden, um Arbeitsbereiche von Aktuatoren oder Belastungsgrenzwerte gemäß den ggf. in der jeweiligen Position reduzierten Kippkanten zu begrenzen.

## Patentansprüche

1. Unterwagen (1) für Tiefbaumaschine, mit
einer Mittelbrücke (3) und
zwei Raupen-Fahrschiffen (2), die mit der Mittelbrücke (3) über ineinander teleskopierbare Holme (5a, 5b) der an gegenüberliegenden Seiten der Mittelbrücke (3) angeordneten Raupen-Fahrschiffe (2) verbunden oder verbindbar sind, sodass die Raupen-Fahrschiffe (2) in einer Teleskopierrichtung zwischen einer definierten Transportstellung mit minimaler Spurweite und einer definierten ersten Arbeitsstellung mit maximaler Spurweite bewegt/verstellt werden können,
**dadurch gekennzeichnet, dass**
die Raupen-Fahrschiffe (2) so ausgebildet sind, dass sie in der Teleskopierrichtung in mindestens eine weitere definierte zweite Arbeitsstellung mit einer geringeren Spurweite als die maximale Spurweite und/oder mit einer relativ zu einer Mittelebene der Mittelbrücke (3) unsymmetrischen Spuranordnung bewegt/verstellt werden können.

2. Unterwagen (1) gemäß Anspruch 1,
**dadurch gekennzeichnet, dass**
eine mechanische Aktuatoranordnung (7) zum Bewegen der Raupen-Fahrschiffe (2) zwischen den definierten Stellungen vorgesehen ist.

3. Unterwagen (1) gemäß Anspruch 2,
**dadurch gekennzeichnet, dass**
die mechanische Aktuatoranordnung (7) Hydraulikzylinder aufweist, die vorzugsweise symmetrisch zu einer/der Mittelebene der Mittelbrücke (3) angeordnet sind.

4. Unterwagen (1) gemäß Anspruch 3,
**dadurch gekennzeichnet, dass**
die Hydraulikzylinder hydraulisch sperrbar sind, um eine jeweilige Ausfahrstellung und darüber die Stellung der Raupen-Fahrschiffe (2) in der Teleskopierrichtung zu fixieren.

5. Unterwagen (1) gemäß einem der Ansprüche 1 bis 4,
**dadurch gekennzeichnet, dass**
eine lösbare mechanische Sicherung (8, 8a), vorzugsweise in der Form einer Absteckeinrichtung, zur Fixierung der Stellungen der Raupen-Fahrschiffe (2) in der Teleskopierrichtung vorgesehen ist.

6. Unterwagen (1) gemäß Anspruch 5,
**dadurch gekennzeichnet, dass**
die Absteckeinrichtung außerhalb eines Gehäuses der Mittelbrücke (3) angeordnet ist, insbesondere in der Form einer Spurstange (9) mit mehreren, den mehreren Stellungen der Raupen-Fahrschiffe (2) in der Teleskopierrichtung zugeordneten Verriegelungspositionen.

7. Unterwagen (1) gemäß Anspruch 5 oder 6,
**dadurch gekennzeichnet, dass**
die mechanische Sicherung (8) unterschiedliche Verriegelungspositionen bezüglich einem jeweiligen Abstand von der Mittelebene der Mittelbrücke (3) für die beiden Raupen-Fahrschiffe (2) aufweist.

8. Unterwagen (1) gemäß einem der Ansprüche 1 bis 7,
**dadurch gekennzeichnet, dass**
in der Mittelbrücke (3) zumindest eine mechanische Einstellvorrichtung (10) vorgesehen ist, vorzugsweise in einem Mittelbereich der Mittelbrücke (3) in der Teleskopierrichtung, die ausgestaltet ist, um eine Spieleinstellung an einer Lagerposition der teleskopierbaren Holme (5a, 5b) zu ermöglichen.

9. Unterwagen (1) gemäß Anspruch 8,
**dadurch gekennzeichnet, dass**
die mechanische Einstellvorrichtung (10) einen Aktuator (15) zum Betätigen eines ersten Druckstücks (14) in einer Zustellrichtung zu den Holmen (5a, 5b) aufweist.

10. Unterwagen (1) gemäß Anspruch 9,
**dadurch gekennzeichnet, dass**
die mechanische Einstellvorrichtung (10) ein zweites Druckstück (12) aufweist, das beweglich in einer Aufnahme (11a, 11b, 11c) eines der beiden Holme (5a, 5b), vorzugsweise dem in Radialrichtung äußeren der teleskopierbaren Holme (5a, 5b), angeordnet ist und mit dem ersten Druckstück (14) in einer Stellung der Holme (5a, 5b) in der Teleskopierrichtung in Anlage bringbar ist, um die Holme (5a, 5b) gegeneinander mit einem definierten Lagerspalt an einer Lagerposition festzulegen.

11. Unterwagen (1) gemäß Anspruch 10,
**dadurch gekennzeichnet, dass**
mehrere Aufnahmen (11a, 11b, 11c) für ein jeweiliges zweites Druckstück (12) in dem einen der beiden Holme (5a, 5b) entsprechend den mehreren Stellungen ausgebildet sind und jeweils ein zweites Druckstück (12) aufnehmen, derart, dass diese mit dem einen der beiden Holme (5a, 5b) bei der Verstellung in der Teleskopierrichtung mit verschiebbar sind.

12. Unterwagen (1) gemäß Anspruch 10 oder 11,
**dadurch gekennzeichnet, dass**
ein Schmierkanal (17a, 17b) so vorgesehen ist, dass er durch das erste Druckstück (14) und, bei Anordnung in der jeweiligen Arbeitsstellung, das entsprechende zweite Druckstück (12) hindurch zu einer Kontaktstelle des zweiten Druckstücks (12) mit dem anderen der Holme (5a, 5b) verläuft.

13. Unterwagen (1) gemäß einem der Ansprüche 10 bis 12,
**dadurch gekennzeichnet, dass**
das zweite Druckstück (12) eine erste Anlagefläche (18) zur Anlage an einer Gegenanlagefläche des einen der Holme (5a, 5b) in der Aufnahme (11), eine zweite Anlagefläche (19) zur gleichzeitigen Anlage an einer Gegenanlagefläche des anderen der Holme (5a, 5b) und eine Kontaktfläche (20) zur Anlage an einer Gegenkontaktfläche des ersten Druckstücks (14) aufweist.

14. Unterwagen (1) gemäß Anspruch 13,
**dadurch gekennzeichnet, dass**
die Aufnahme (11) eine Stufenbohrung in einer oberen Wand des einen der Holme (5a, 5b) und das zweite Druckstück (12) ein dazu passend abgestufter Materialblock ist.

15. Unterwagen (1) gemäß einem der Ansprüche 1 bis 14,
**dadurch gekennzeichnet, dass**
die Raupen-Fahrschiffe (2) symmetrisch bezogen auf eine/die Mittelebene der Mittelbrücke (3) ausgebildet sind.
